# EUROPEAN PATENT SPECIFICATION

(11) **EP 1 784 948 B1**
(45) Date of publication and mention of the grant of the patent: **19.10.2011**
(21) Application number: 05788634.3
(22) Date of filing: 24.08.2005
(51) Int. Cl.: H04L 12/24

(54) **SYSTEMS AND METHODS FOR NETWORK MANAGEMENT**
SYSTEME UND VERFAHREN ZUR NETZWERKVERWALTUNG
SYSTEMES ET PROCEDES DE GESTION DE RESEAU

(30) Priority: 24.08.2004 US 603569 P
(43) Date of publication of application: 16.05.2007
(73) Proprietor: Panduit Corp., Tinley Park IL 60477 (US)
(72) Inventor: CAVENEY, Jack, E., Hinsdale, IL 60521 (US); LESHIN, Brian, D., Mokena, IL 60448 (US); NORDIN, Ronald, A., Naperville, Illinois 60540 (US); WILCOX, Robert, Lansing, IL 60438 (US); LITAO, Jonathan, D., Tinley Park, IL 60477 (US); JACKS, Steven, A., Villa Park, IL 60181 (US); TISON, Jack, D., Bourbonnais, IL 60914 (US)
(74) Representative: Roberts, Gwilym Vaughan
(86) International application number: PCT/US2005/029827
(87) International publication number: WO 2006/023868

(56) References cited:
- US-A- 5 295 139
- US-A1- 2002 169 862
- US-A1- 2004 005 046

## Description

### BACKGROUND

Network Management Systems (NMS) are important elements of Networks. While current NMS are very capable, improvements are needed.

### SUMMARY

The invention is set out in the claims.

An NMS architecture is disclosed that takes advantage of intelligence-capable network devices for network monitoring and control. Instead of only collecting information at and issuing control commands from a central NMS, NMS functions may be distributed where possible to intelligent network devices where local storage and processing may be formed. Local collection and processing of monitoring information may reduce NMS-related network traffic, permit continuing local control and operation during times of network communication disruption with the central NMS, and permit greater reliability in data collection and execution of network functions such as the enforcement of security policy at the respective intelligent network devices.

For example, patch panels and jack receptacles may be network devices disposed downstream of a network switch for easy connection of end-user devices via an RJ45 connector. Intelligence may be introduced into these network components, including information storage, so that monitoring information may be collected and stored at these devices and any network-wide policies may be enforced at these levels.

When installed, an intelligent jack receptacle, such as an active jack (A-Jack), may be loaded with physical location information (e.g. a room number) and security information, such as a list of media access control (MAC) addresses permitted at that A-Jack. Should an end user device having an unauthorized MAC address attempt connection, the A-Jack may independently reject connection and thus enforce network policy. Further, the A-Jack may report such enforcement action to the central NMS without requiring multiple actions from the central NMS with attendant network traffic.

While monitoring and physical location information may be collected and stored at the A-Jack, such information may be uploaded to the central NMS or any intervening intelligent network device for higher-level monitoring and control. For example, the central NMS may maintain topology information for network administration purposes. A command may be issued by the central NMS to all intelligent network devices so that physical location and connection information may be uploaded either immediately or at specified time intervals, for example. In addition, other information such as changes to physical location data, security violation information, device events, etc., may be autonomously sent to the NMS for efficient network management.

Intelligence may also be disposed at the patch panel so that network connection information may be readily determined and controlled. For example, when new equipment is installed, the end-user device may be allocated a particular port at the intelligent patch panel (I-Panel). The I-panel may record the new connection in its local memory and confirm that the MAC address of the new end-user device satisfies any security policy. If there is an equipment failure and a change in network connection is required, the I-Panel may record the connection changes (move/add/change), record the new MAC address, and record the fact of the change including date stamp, for example, so that analysis may be performed immediately for security enforcement, or performed later to determine network maintenance schedules, for example.

Should the attached device be supplied power via the patch panel (e.g., powered-patch-panel or PPP), additional power-related monitoring and control data may be stored locally at the PPP and enforcement of power policy may be performed locally at the PPP. For example, power consumption of each port may be monitored, and when set limits are exceeded, additional power may be restricted, power supply to that port may be terminated, warnings may be issued, etc. Additionally, the PPP may report any of this information to higher-level intelligent network devices or to the central NMS for further monitoring and control functions.

Thus, the intelligent network devices such as the PPP, I-Panel and A- Jack together with the NMS may provide a basis by which intelligence may execute command and control over a wide range of device specific features and capabilities. Additionally, locally collected information may be accessed, modified, deleted, etc. by the NMS to obtain the status of the respective PPP, I-Panel and A-Jack devices for network-level processing that may result in distribution of new command and control parameters consistent with administrative, security and/or power policies to local intelligent network devices for local monitoring and control.

US 5,295,139, Palmer, discloses a management system for a partitioned multi-band width communications network, in which end users are allocated virtual networks of limited bandwidth residing on lines of larger bandwidth. The management system includes a central management computer for use by network operators in communication with local terminals for use by end users. Tasks such as configurations for new circuits may be requested by the central operators as well as by the end users.

### BRIEF DESCRIPTION OF THE DRAWINGS

The invention is described in detail with reference to the following figures wherein like numerals reference like elements, and wherein:

FIG. 1 is a schematic overview of an exemplary network system that provides connectivity between end-user devices and a network management system (NMS);

FIG. 2 is a schematic diagram of the network system presented in FIG. 1 that provides additional detail for connecting the end-user devices and the NMS to the network;

FIG. 3 is an exemplary block diagram of the network system presented in FIG. 2 with additional detail.

FIG. 4 is a system-level block diagram of an exemplary intelligent network device;

FIG. 5 is a system-level block diagram of an exemplary NMS;

FIG. 6 is an exemplary Move/ Add/Change work order process flow;

FIG. 7 is an exemplary NMS solicitation process flow;

FIG. 8 is an exemplary event notification process flow;

FIG. 9 is an exemplary detail event notification process flow; and

FIG. 10 is an exemplary NMS database update process flow.

### DETAILED DESCRIPTION OF EMBODIMENTS

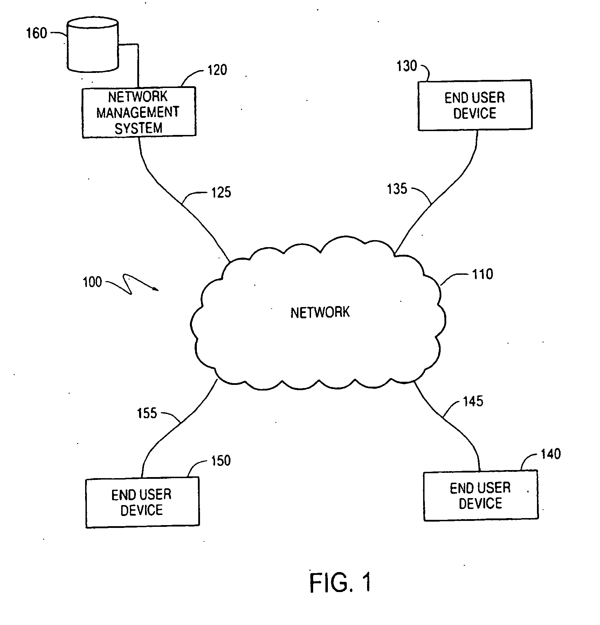

FIG. 1 shows an exemplary system 100 that includes a network management system (NMS) 120 and end-user devices 130, 140, 150 interconnected by a network 1 10. The network 110 may represent a local area network. (LAN), a wide area network (WAN) or other connectivity architecture. NMS 120 and the end-user devices 130, 140, 150 are connected to the network 110 via wired, wireless or optical links 125, 135, 145, 155. NMS 120 is connected to a storage 160.

NMS 120 performs network management functions, such as maintaining a network topology database, network configuration management and control, security policy definition and distribution, network monitoring that may include monitoring a connectivity and operational status of end-user devices 130, 140, 150, security violations, power distribution status for power-over-network systems, etc. These network management functions may be performed by NMS 120 by sending commands to and receiving responses or by monitoring for autonomous event notification from intelligent network devices (i.e., network devices that are able to communicate with and are managed by NMS) within network 110 and/or end-user devices 130, 140, 150.

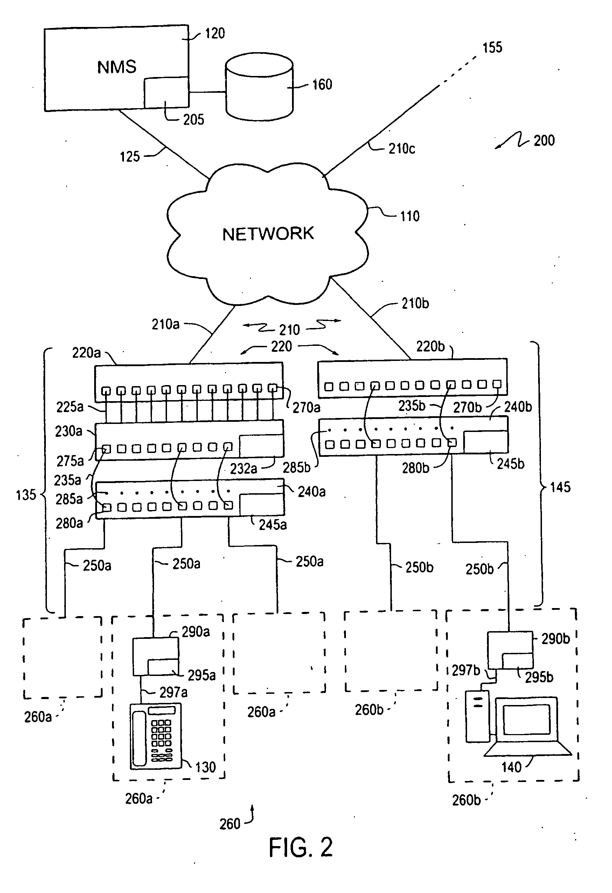

FIG. 2 shows an exemplary block diagram 200 of system 100 with expanded detail assuming wired connections as an example. Links 135 and 145 are expanded to show switches 220 such as Ethernet-based communication switches, a cross-connect patch panel 230a, and powered-patch-panels (PPPs) 240. PPPs 240 are used here as an example. Passive-patch-panels or intelligent patch panels may be used if power delivery to end-user devices is not required at this point.

Link 135 is shown in a cross-connect configuration having switch 220a connected to network 110 by cable 210a, cross-connect patch panel 230a connected to switch 220a by cables 225a that connect switch ports 270a of switch 220a to punch-down blocks located on the back of cross-connect patch panel 230a. Cross-connect patch panel 230a may be connected to PPP 240a by patch cords 235a using ports 275a and 280a.

PPP 240a may be connected to jacks in rooms 260a by horizontal cabling 250a that is connected to the PPP 240a via punch-down blocks of PPP 240a located at the back end of the PPP 240a, for example. End-user devices 130 may be located in the rooms 260a and connected to the network 110 through the jacks such as A-Jack 290a in room 260a, for example.

The positions of cross-connect patch panel 230a and PPP 240a may be exchanged so that PPP 240a is connected to switch 220a and cross-connect patch panel 230a is connected to PPP 240a by patch cords 235a, and to rooms 260a by horizontal cabling 250a via punch-down blocks of the cross-connect patch panel 230a. Also, a power hub may be disposed between switch 220a and cross-connect patch panel 230a instead of PPP.

Link 145 is shown in an interconnect configuration that connects PPP 240b to switch 220b. Jacks such as A-Jack 290b in rooms 260b are connected to punch-down blocks of PPP 240b via horizontal cabling 250b. Thus, the interconnect configuration eliminates the need for a cross-connect patch panel.

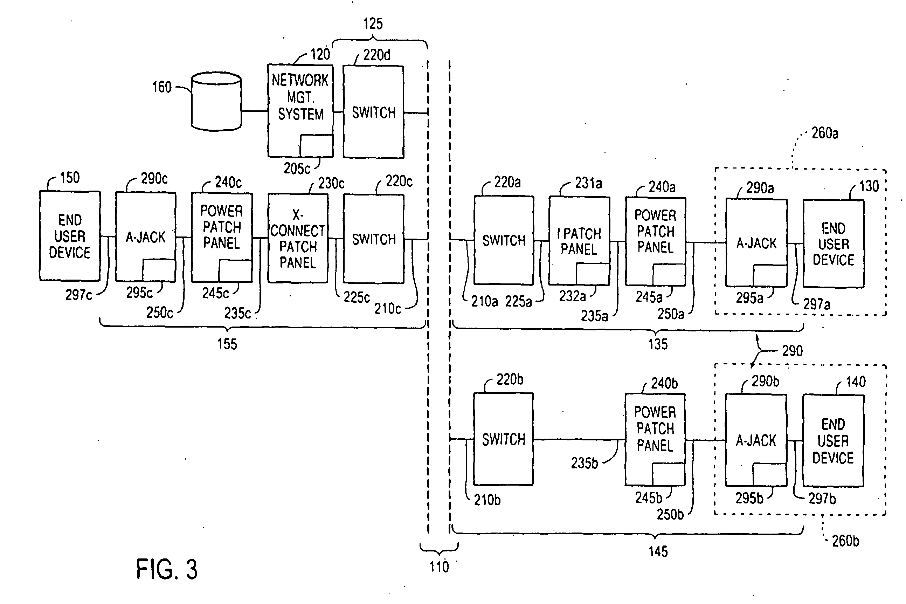

FIG. 3 shows the network devices and connections illustrated in FIG. 2 with additional detail and possible variations. Link 135 is shown with cross-connect patch panel 230a replaced by an I-Panel 231a; link 145 is identical to that shown in FIG. 2; and link 155 is shown expanded with cable 210c, switch 220c, cross-connect patch panel 230c, PPP 240c and A-Jack 290c connected substantially in the same manner as in link 135. DIFs 245c and 295c are illustrated for PPP 240c and A-Jack 290c, respectively. Link 125 is expanded to show switch 220d.

Room 260a is shown to include A-Jack 290a connected to an end-user VoIP telephone 130 by a line 297a. Room 260b is shown to include A-Jack 290b connected to an end-user PC 140 by a line 297b. A-Jacks 290, I-Panel 230a and PPP 240 are intelligent network devices that can send and receive messages to/from NMS 120. Further, A-Jacks 290 may be capable of monitoring and controlling the distribution of PoE to the end-user devices 130 and 140.

NMS 120 may perform network management functions by communicating with intelligent network devices such as PPP 240, intelligent patch panel 230a, and/or intelligent jacks such as A-Jacks 290 to be discussed below via the links 135, 145 and 155. While data may be shared between NMS 120 and any of the intelligent network devices in many ways, it is convenient to define formats for data exchange so that efficient data communications may be achieved. To this end, device interface files (DIF) may be stored at each intelligent location so that data that are transmitted may be received and successfully parsed. DIFs may define multiple formats because data types and quantities of data may be highly dependent on a particular intelligent network device. For example, communications with PPP 240 may relate to power consumption, voltage and current thresholds, while for A-Jacks 290, MAC addresses and security policy information may be more relevant. Moreover, all devices may store its own physical location data. Thus, as shown in FIG. 2, DIFs 205, 232a, 245a, 245b, 295a, and 295b are illustrated for NMS 120, I-Panel 230a, PPP 240a, 240b and A-Jack 290a, 290b, respectively.

NMS 120 maintains in storage 160 a database of network topology and device information may be retrieved from each DIF in NMS 120, I-Panel 230a, PPP 240a, 240b and A-Jack 290a, 290b, respectively to provide centralized control. Physical topology information may include unique identifiers for each network device, physical locations of network devices such as building/floor/room number identifier, equipment rack identification, position in the identified rack, horizontal cabling work area identification, etc. Logical topology information may include network device connectivity such as patch panel identification, patch panel port number, jack identification, horizontal cable and work area jack identification, power source identification, etc.

NMS 120 may include an operator terminal equipped with a graphical user interface (GUI) that permits an operator to maintain and control the network and administer desired policies. For example, such a GUI may permit the operator to view graphically monitored power and failure status of devices connected to intelligent network devices such as I-Panels, PPPs and A-Jacks in the network that are equipped with monitoring hardware and such status of the intelligent network devices themselves. When so equipped, such status information may be resolved down to each port of I-Panels and PPPs.

The GUI may provide a graphical display of the topology of a network. The topology may be organized into trees and each branch of the tree may form a sub-network of the network, or may provide a floor plan detailing physical aspects of the building where the intelligent devices reside. For example, the GUI may display:
1. a hierarchical view of all patch panels (passive, intelligent and/or powered) within the network;
2. listing of PPPs and/or I-Panels; and
3. information for each PPP and/or I-Panel of a selected rack.
The GUI may provide capabilities to support functions such as searching for panels of a selected sub-network across a range of IP addresses, viewing and/or changing information on a per port basis, etc.

The network topology and device information (TDI) database may be populated in at least two ways: 1) responses to NMS requests for such information where the source is each intelligent network device; and 2) notification from intelligent network devices based on events local to the intelligent network device such as connectivity changes to the device. To efficiently maintain the network, NMS 120 may update the TDI database periodically, based on a schedule, etc. When an update is to be performed, NMS 120 may send out information requests, such as the "GET" messages when using SNMP, to all the intelligent network devices. When the message is received, each of the intelligent network devices may report its status and the status of any connected devices. For example, data that may be received from the intelligent network devices may include:
1. physical location information such as room identification, rack identification, horizontal cabling work room jack identification, etc.;
2. connection information such as panel and port identification, switch port identification, power supply source identification, etc.;
3. whether or not powered devices are connected to a port; and
4. an amount of current consumption.
This is especially relevant to intelligent network devices such as a PPP because PPPs supply power to their ports and the-total amount of power supplied through a PPP may be monitored for network power budget purposes.

As indicated above, the TDI database may also receive information via autonomous notifications from intelligent network devices based on occurrences of events local to the intelligent network device. Information received from such notifications may include:
1. detected security breaches based on MAC address filters. Such filters may be implemented by PPPs, I-Panels and/or A-Jacks based on a list of valid MAC addresses that may be connected to a particular port, for example;
2. location changes resulting from RJ45 jacks removed from ports, end-user devices connected or disconnected from ports such as A-Jacks, etc.;
3. detected failures such as a voice over IP phone or computer not responding, cable breaks resulting in no signals from downstream devices, etc.;
4. powered devices for a PPP port, for example, that have been disconnected;
5. non-compliant powered devices such as power consumption over specified limits;
6. PPP power consumption dropped below a threshold;
7. PPP physical location has been changed;
8. PPP incoming voltage is outside desired range (e.g., too high or too low);
9. PPP power fuse blown;
10. the amount of incoming power to a PPP;
11. PPP power consumption exceeded a threshold;
12. I-Panel detected patch cord connections;
13. I-Panel detected patch cord disconnections;
14. PPP and I-Panel detected management port connections; and
15. PPP and I-Panel management port disconnections.

An operator may use the GUI to control the network by setting various parameters of intelligent network devices. For example, an operator may:
1. perform maintenance by monitoring any patch panels (e.g., verify port connections by sending test signals, confirm connection to an intelligent network device, etc.);
2. designate priority for output power for an A-Jack or any port of a PPP. For example, a port may be designated as low, high or critical priority;
3. set thresholds for power consumption for a PPP or any of its ports. For example, such thresholds may be set in the form of current and/or voltage values;
4. real time monitoring and setting thresholds of current and voltage of power inputs for a PPP, for example. Thresholds may be set for detection of alarm conditions;
5. when a PPP is supplied by two power supplies, monitoring a parameter of a first power supply, the parameter of a second power supply and the parameter at a summation point, such as a voltage or current, for example;
6. command outputting full power for all ports of a PPP;
7. detecting and displaying power consumption for a panel (e.g., I-Panel or PPP) or one or more ports of the panel;
8. selectively powering down one or more ports of a panel such as a PPP;
9. assign dynamic (DHCP) or static IP address;
10. specify delivering no power to a port of a panel such as a PPP;
11. control operation of LEDs of a PPP (e.g., blinking rate, on/off, etc.); and
12. assign power mode (e.g., normal, forced or forced with device check) for each port of a PPP.

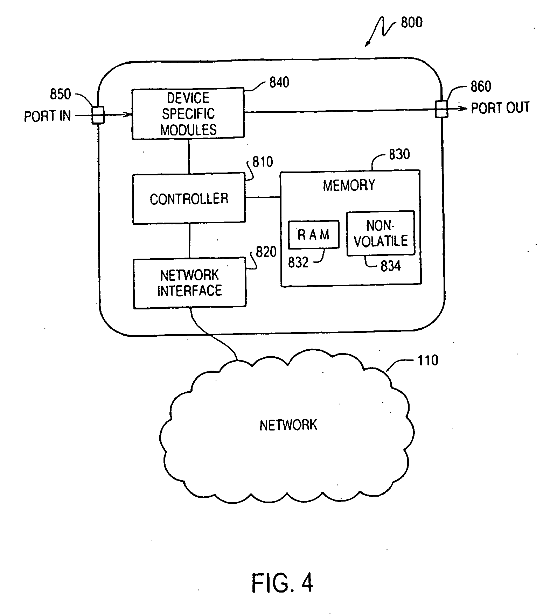

FIG. 4 illustrates an exemplary block diagram for an intelligent device 800 that is manageable by NMS 120. Intelligent network device 800 may be a variety of device types, e.g., the A-Jack 290, the I-panel 230a, the PPP 240, the VoIP telephone 130, the PC 140, etc. The intelligent network device 800 may include: a controller 810; ports, such as ports 850 and 860 representing two-way communication; network interface 820, and a memory 830 that may include random access memory 832 and non-volatile memory 834. Further, intelligent network devices may receive, process and submit messages across the network 110. Intelligent network devices may store selected DIF-defined data in RAM 832 and/or non-volatile memory 834. In their manner, the intelligent network device may retain DIF-managed objects in non-volatile memory thereby allowing the intelligent network device to serve as a storage location for those DIF parameters. This description presents a set of exemplary DIF-defined data that may be stored in non-volatile memory. Depending upon the amount of non-volatile memory, any or all of the DIF-defined data may be stored in non-volatile memory. In this manner, applied policies may remain enforced even after power to an intelligent network device has been lost and then restored.

Controller 810 connects to network 110 via network interface 820 and stores variables such as MAC address information, DIF, local compliant device control data, local status data, etc., in memory 830. Data in memory 830 may be sent to, or received by, NMS 120 for network maintenance and control.

Information may be provided from the intelligent network devices to NMS 120 either autonomously (i.e., as a result of an event notification from the intelligent network device to NMS 120) or in response to an interrogation request issued from NMS 120 to one or more intelligent network devices. Based on this information, NMS 120 may derive information such as logical and physical connectivity information, device configuration and/or physical location. For example, NMS 120 may interrogate any or all of the intelligent network devices to request their respective unique identifiers (e.g. MAC addresses) and their physical and logical attachments in order to map logical and physical locations of these intelligent network devices.

For example, as described in connection with FIG. 3, NMS 120 may receive a notification event from switch 220a and an event notification from PPP 240a that indicate a communications disruption (e.g., that a link is down) downstream of those intelligent network devices on link 135 supported by those devices. Based upon network connectivity information stored within storage 160 and/or a port associated with the link identified by a PPP 240a, NMS 120 may issue a request interrogation to A-Jack 290a associated with the link. If NMS 120 does not receive a response from A-Jack 290a, NMS 120 may interpret the combined information as a communication interruption, specifically within cable 250a connecting PPP 240a and A-Jack 290a.

In another example, NMS 120 may receive a "link down" event notification from A-Jack 290a associated with link 135 supporting end-user 130. With no "link down" from switch 220a, NMS 120 may interpret the event notification as a problem in work area or room 260a, and suggest that end-user device 130 has failed or been disconnected. Thus, NMS 120 may isolate the fault to a portion of a horizontal cable infrastructure or work area.

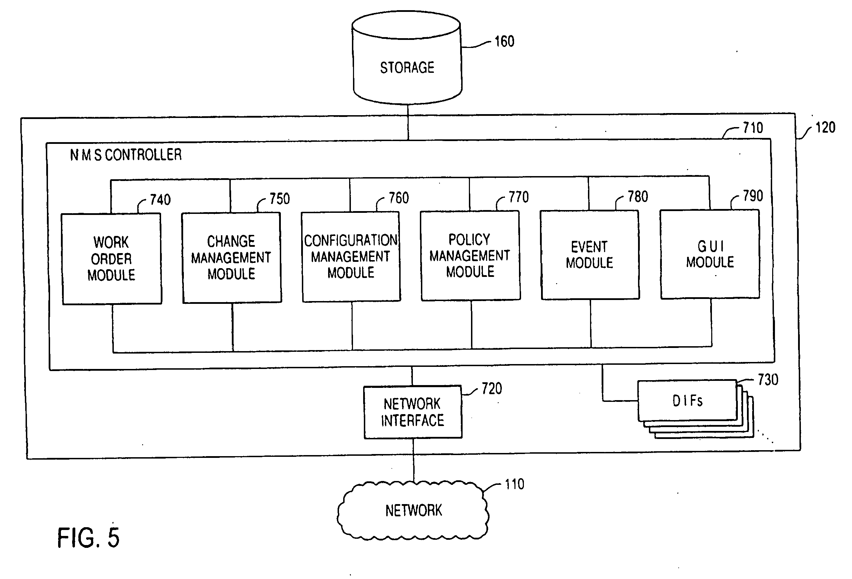

FIG. 5 shows an exemplary block diagram of NMS 120 that may include an NMS controller 710, network interface 720 and device interfaces file 730. NMS controller 710 connects to network 110 via network interface 710, uses device interface files 730 for device communication processing and couples to storage 160 for storing information needed to enforce policies, network maintenance and control, etc. Exemplary modules 740-790 are shown within NMS controller 710. These modules may be implemented as software programs executed by NMS controller 710 For purposes of discussion, modules 740-790 are assumed to be software programs and their names are used when NMS controller 710 executes their functions.

Configuration Management Module (CM) 760 uses and maintains within the network in storage 160 a network database containing information related to all intelligent network devices detected. When a managed device is added, deleted or changes location, for example, CM 760 may update the network database by creating new entries (provisioning), deleting existing entries or changing entries in the network database.

When an intelligent device is provisioned, installation-specific information (e.g., building, floor, work area, etc.) as well as a network device product family, and a product group within the product family, to which the network device belongs are sent to NMS 120, and CM 760 updates the network database accordingly. Upon startup, the intelligent device may initiate a DIF-compliant event notification that notifies NMS 120 of the intelligent network device and provides NMS 120 with the DIF-compliant event data such as enumerated above. If such notification is not performed, the CM 760 may detect the intelligent network device when scanning the network and request the installation specific information from the device at this time.

For example, a product family may include the PPP, the 1-Panel, and the A-Jack as three separate groups of devices. NMS 120 may be used to initially provision the intelligent network device with installation specific information. As a part of the provisioning process, the CM 760 may identify an intelligent network device as belonging to one of the above groups by a unique identifier such as the MAC address or DIF-based product identifier and an appropriate entry may be made in the network database. Additional information for this device may be entered into the network database during provisioning. For example, such an entry may be made to indicate the physical location of the device (e.g., building, floor, work area, GPS coordinates, connectivity with other devices, logical or physical sub-net location within the network, etc.), whether the device should be assigned a dynamic IP address or given a static IP address directly by NMS 120, an IP subnet mask, a default Gateway IP address, etc. The CM 760 may also initialize network database structures for receiving event notification data from the intelligent network device. Further, CM 760 may store event notification related information that controls the distribution of notification events (i.e., traps) generated by the network device. NMS 120 may then permanently store this information in the device using the DIF. Conversely, such information may be used by NMS 120 through retrieval from each device in the network to construct physical and logical topology maps for presentation to an operator via GUI Module (GUI) 790, for example.

The information may be stored within a table in each intelligent network device that may be accessed each time an event notification (e.g., trap in SNMP) occurs. The notification table may identify recipients to which the intelligent network device may send notification events. For example, CM 760 may be used to enter an IP address of NMS 120 as well as an IP address of other NMSs 120 that may take over should NMS 120 be disconnected. In an exemplary SNMP-based environment, NMS 120 may record up to five SNMP trap destinations in each intelligent network device. For each trap destination there may be added a bit-mask filter that is used to filter the severity level that must be reached in order for the destination to receive the notification event. These levels, for example, may include critical (1), major (2), minor (4), advisory (8), and all (15). The severity value may be a combination of the levels in order to allow the destination IP address to receive more than one severity level. Detailed information related to IP objects that may be stored for a network device may be included within a preferred embodiment presented later in this description. Further, this description provides information related to how DIF data may be stored within an intelligent network device (i.e., whether the managed data is stored in volatile or non-volatile memory).

Further, upon detection of an intelligent network device, NMS 120 may record the physical location information associated with the detected device. For example, if the detected device is a patch panel type device such as a PPP or an I-Panel, CM 760 may record an identifier for the rack in which the panel is mounted, the panel's location in the rack expressed as a rack position number, a location of the panel, and the name of a power supply that is associated with the panel. Further, a list of work area locations, i.e., end-user device locations, that are serviced by each port in the panel may also be recorded in association with the panel device. Please note that when the device family version and MAC address are recorded, a firmware version number for the device is also recorded as well as a location of the managed object of the intelligent network device. In addition, an active jack may store the floor and room number and associated street address where it is located, along with the ID of the cable to which it is terminated, and the panel and port where the cable has been terminated.

Once CM 760 has recorded or retrieved identity information related to the detected device, (e.g., the type of device, an identifier for the device, a physical location for the device, a MAC address, an IP logical address for the device, as well as information related to each end-user work area and cable terminations supported by each port in the device) entries within storage 160 related to establishing an identity related to the newly detected device may be complete.

The information recorded in the network database may vary depending upon the nature of the intelligent network device. For example, an A-Jack device may have the same product family and location information as a panel device with multiple ports, however, given that an A-Jack is a single port, information related to one port may be recorded as opposed to a PPP that may include 24 ports, for example. The information recorded for all intelligent network devices may have similar data structures with respect to common features shared between intelligent network devices belonging to same product family.

The Event Module (EM) 780 may be used to organize and parse received event notification data for extracting relevant information. If the received data is an alarm message, for example, EM 780 may log the entry within a message log maintained within storage 160. Further, if the received data is an alert of sufficient severity that the alert should be brought to the attention of an operator, the EM 780 may format the received data for presentation via GUI 790. An event notification containing possible changes to configuration managed data may be transferred to CM 760 for parsing and further processing.

The EM 780 may display communication fault messages when NMS 120 is unable to reestablish a connection with a formerly connected intelligent network device. EM 780 may include the capability for storing and displaying a listing of all reported network device events. The listing of such events may be enhanced via color coding by severity, displayed with attributes that may include: 1) severity (critical, major, minor information); 2) time of day; and 3) a summary of the events including the physical location of the affected network device. The log may be exportable and may support automated parsing by systems external to NMS 120.

GUI 790, may support:
1. a graphical construct for the building floor room and rack for each monitored network device;
2. a graphical construct for the rack in which a monitored network device is positioned;
3. a graphical representation of the monitored network device (e.g., an A-Jack, an 1-Pane! or PPP);
4. the graphical representation of the monitored network device may reflect the current state of an LED on the front of the face on the monitored network device;
5. the graphical representation of the monitored network device may reflect the current state of the powered devices (PDs) associated with the ports of the monitoring network device;
6. each port on the graphical representation of the monitoring network device may be used as a launch point to additional information related to the port, or the device attached to the port, depending upon the state of the displayed monitored network device and/or the device connected to the selected port;
7. presentation of physical topology mappings which are physically accurate. For example, if an A-Jack is connected to a port on the PPP, the physical topology mapping may reflect that connection. The graphical user interface may also support logical topology mappings. Both logical and physical mappings may be based upon information retrieved from the information storage 160 by the GUI 790 based upon parameters provided by user via a preliminary graphical user interface display; and
8. print outs that may include:
   1) complete inventories of all monitored network devices included in storage 160 including details related to port information and port connections;
   2) a partial inventory of all products, port connections and details of port information. Parameters may include:
      a. end locations of ports;
      b. types of panels;
      c. types of PDs;
      d. classes of PDs;
      e. power profile of all products;
      f. total power consumption;
      g. percent utilization of switch ports; and
      h. percent utilization of intelligent network devices.
All of the above information may be retrieved on demand from each intelligent network device, reflecting a real-time view of the physical and logical connectivity, including the power utilization of all attached power devices.

Further, the GUI 790 may provide the capability of generating ad hoc reports based upon a diverse set of parameters that may include any item that is managed by the network management system. Formatting of reports may be provided such as:
1. screen-based and printable;
2. PDF format;
3. ASCII text format; and
4. Comma Separated Value (CSV) format.

In addition to providing access, display and printout of information, a command line interface may be provided by GUI 790 that may be used to directly enter commands and receive results from a monitored network device. Such manually entered commands and received results would be compatible with the interface defined by the DIF.

Policy Management Module (PMM) 770 may define network-wide policies for intelligent network device control such as security, power management, firmware updates, etc. Policies may be implemented as DIF-compliant control parameters enforced by distributing these parameters to intelligent network devices.

For example, PMM 770 may define power servicing equipment (PSE) policies for the PPP or A-Jack by setting parameters relating to rules with respect to the absence or presence of PSE functions within these devices on a per-port basis.

DIF-defined parameters may be set within one or more selected PSE network devices to control which Ethernet cable pairs PoE power is distributed upon. Similar DIF-defined parameters may be controlled by the policy manager to configure PSE equipment to:
1. control the types ofPoE equipment the PSE equipment is to detect (i.e., IEEE standard 802.3af equipment only, standard and non-standard equipment, and/or variations of non-standard equipment);
2. activate or deactivate PSE service on a port by port basis;
3. set PD PoE priority and/or maximum power level, on a port-level basis;
4. control PSE priority on a per-port basis at PMM 770 by setting the DIF parameter that controls port power priority to one of critical, high and low. A default value for the port power priority may be Critical;
5. control PoE Powered Device (PD) detection techniques on a per-port basis, PMM 770 may set the DEF-defined parameter that controls PD search type based upon one of a set of possible enumerated types defined in the DEF; and
6. control PoE PD power classification on a per-port basis. DIF-defined parameters for port power classification may be one of the following DIF-defined enumerated types:
   a) class0(l): The PD is a Class 0 device;
   b) class1(2): The PD is a Class 1 device;
   c) class2(3): The PD is a Class 2 device;
   d) class3(4): The PD is a Class 3 device; and
   e) class4(5): The PD is a Class 4 device.

In another example, PMM 770 may define OSI layer 3 connectivity rules for an A-Jack based on time of day, physical location, or connected MAC addresses. DIF parameters may be set based on a set of policies disseminated by PMM 770 that control the A-Jacks to:
1. control the layer 3 connectivity of a group of A-lacks based on the time of day in such a manner that attached devices such as Ethernet devices may be excluded from network connectivity based on the day of the week or time of day.
2. control the layer 3 connectivity of a group of A-Jacks based on physical location in such a manner that the attached devices such as Ethernet devices may be excluded from network connectivity based on their location in a group of rooms, and entire floor, a group of floors, a building, or a group of buildings, and;
3. control the layer 3 connectivity of a group of A-Jacks based on a connected device's MAC address in such a manner that the attached devices such as Ethernet devices may be excluded from network connectivity based on their MAC address or a range of MAC addresses.

Once PMM 770 detects the proper conditions for the policy (e.g., time of day) and sets the DIF-defined parameters, the policy may be executed. For example, after a power mode is transmitted to a DIF parameter in the intelligent network device, the device may proceed to control the port according to the value of the control parameter. PPM 770 functions may also be deployed and enforced by intelligent network devices in a distributed manner.

As another example, PMM 770 may set parameters related to threshold parameters that control the monitoring of alarm conditions within intelligent network devices throughout the network. These changes may then be sent to the respective devices and the policy may be enforced in a distributed manner at the respective devices.

PMM 770 may implement a policy via strategic changes to any combination of DIFs of intelligent network devices. PMM 770 may access storage 160 to retrieve a listing of devices by family or group or by the physical location of the devices within the network or by their logical IP address or by any other parameter associated with device information stored in storage 160. Where applicable, the policy management module may include screens (e.g., via GUI 790) that allow control parameters across a wide range of selected network devices to be updated in parallel. The applied parameter change may be stored as a network management system policy. These stored parameters may be retrieved at a later date and applied again. For example, stored policies may be selected and applied to override or restore changed values. Further, upon implementing a policy, the PMM 770 may store the modified values and thereby provide the ability for an applied policy to be undone should the affects of applying that policy result in undesired results.

Change Management Module (CMM) 750 may be used by the operator to define and store proposed network connectivity changes. These may be referred to as work orders. Such work orders preferably include specific, port-level instructions for moving, adding, and/or changing cable connections within the network. Work Order Module (WOM) 740 may be used by the operator to coordinate the execution of defined move/add/change instructions.

CMM 750 and GUI 790 provide the operator with displays of network logical and physical topology maps as well as intelligent network device-specific information, including port-level connectivity information stored in the network database. Based on the displays, the operator may make desired moves, additions, removals or other changes collectively referred to as move/add/change operations. Defined move/add/change operations may be stored for later execution by network technicians, for example. An operator may define change work orders for any cabling located anywhere within the network, at any connection along a physical link as described in FIG. 3. (e.g., physical links 135, 145 and 155). Change orders may be grouped by geographical location, network functional area, skill level of the network technician that may be required to implement the change order, etc. Thus, a change order may group move/add/change operation to rooms, racks or horizontal cable work rooms, for example.

WOM 740 assists a network technician to execute the move/add/change defined by CMM 750. Once the technician is physically present at the site, WOM 740 may instruct an intelligent network device to guide the network technician via LED indicators of a PPP or I-Panel, for example. WOM 740 may instruct the intelligent network device to change a status indicator LED on a front panel of the device to guide the move/add/change operation via, for example, a solid or blinking amber state, thus providing visual aid to the network technician. Multiple intelligent network devices may be controlled simultaneously to indicate two or more points of connections.

In one exemplary embodiment, an intelligent network device may maintain a table of current port connections. For each port supported by the intelligent network device, the table may identify the port and the MAC address of a far end port to which the port is connected. If the port is not connected to another port, the table entry for the far end port may be zero. This table may be used to determine when the connection status of a port has changed. For example, when a port change is detected, the intelligent network device may compare new information (e.g., far end port/MAC information, etc.) with the information stored within the current port connections table. If the information does not match, the intelligent network device may be able to determine whether the port connected device is new, a change, or a disconnection, and generate an appropriate event notification to NMS 120.

A similar approach may be used to support monitoring of an execution of network connection work orders. For example, when a work order is selected for execution, NMS 120 may transmit to an affected intelligent network device a physical layer management (PLM) connection command indicating a command type such as 'connect' - to connect two ports; 'disconnect' - to disconnect a port; 'cancelconnect' - to cancel a connection command; 'canceldisconnect' - cancel a disconnection command; and 'trace' - to trace a port. In addition to the type of command, the PLM command may further include:
1) the identity of the associated near end port number (if applicable) ;
2) the identity of the associated far end port number (if applicable);
3) the identity of the associated far MAC address (if applicable); and,
4) a length of times to continue LED operations after PLM command has been completed.

The intelligent network device may store the information received with each received PLM command in a "planned" connection table. Upon detecting a physical change on a port, the intelligent network device may compare information available regarding the new connection against the information contained within the "planned" connection table to determine whether the planned changed was executed properly. For example, if the port information matches information stored in the "planned" connection table matches information associated with a new port connection, the intelligent network device may determine that the work order was executed properly. Otherwise, the intelligent network device may determine that the work order was not executed properly.

Event notifications sent to NMS 120 may include that the intelligent network device has detected a new:
1) connection;
2) disconnection;
3) new connection that does match the entry in the planned connection table; and
4) new connection that does not match the entry in the planned connection table.

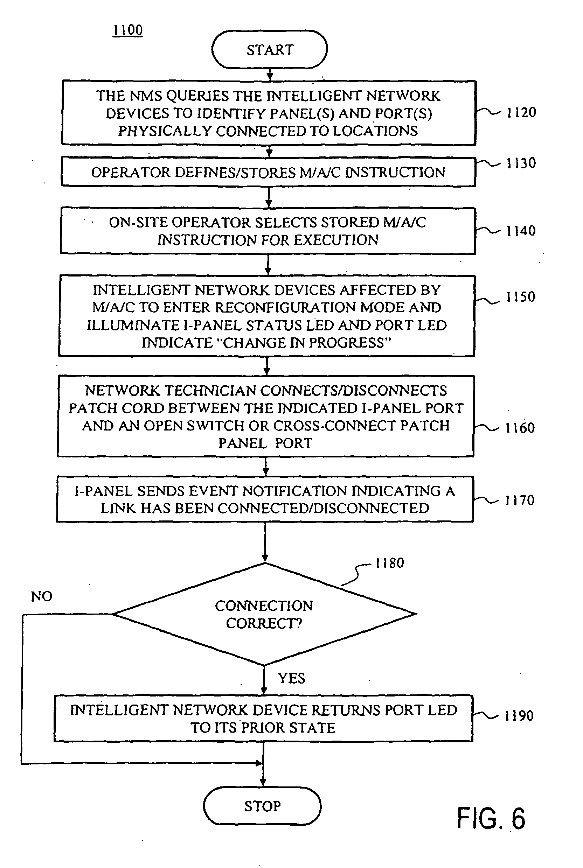

FIG. 6 shows an exemplary process 1100 for the adding of a connection between a switch and an outlet through a patch panel in an interconnect or a cross-connect configuration.

Prior to execution, an operator may determine the physical location(s) or room(s) that requires network connection(s) and enter that information into NMS 120. Then, process 1100 executes as follows:

In step 1120, NMS 120 may query the intelligent network devices to identify the panel(s) and port(s) that is physically connected to the desired location;

In step 1130, the step may define anew move/add/change work order using CMM 750 and GUI 790; In step 1140, an on-site operator may then select and initiate the defined work order (note that the selection and initiation of the defined work order may be optional and NMS 120 may immediately move to step 1150); In step 1150, NMS 120 may instruct an I-Panel, for example, to enter reconfiguration mode and to change the STATUS indicator LED and the port LED on the front of the panel to a solid amber state for the duration of the add operation;

In step 1160, the network technician may connect or disconnect a patch cord between the indicated I-Panel port and another switch port (e.g., in an interconnect configuration) or between the indicated 1-Panel port and a cross-connect patch panel (e.g., in a cross-connect configuration);

In step 1170, the I-Panel may send an event notification (trap) to NMS 120 indicating a link has been connected/disconnected;

In step 1180, NMS 120 determines whether the intended panel port has been connected;

In step 1190, NMS 120 may instruct the panel to visually indicate a successful add/move/change by returning the port LED to its state prior to the add operation; and

WOM 740 may provide a mechanism to control and track the execution of the reconfiguration for a panel such as the I-Panel and PPP. For example, WOM 740 may allow the user to restrict by selecting the type of reconfiguration needed such as only add or only remove patch cord. Additionally, the current status of the reconfiguration request may be managed according to the following list of states:
1) pending - The reconfiguration request has been entered into NMS 120, but has either not been initiated or has been initiated but has a start date that is later than the current date. The panels and ports associated with this reconfiguration request may not be available for other reconfiguration requests;
2) in process - The reconfiguration request has been entered into the NMS 120, and has been initiated by NMS 120, the I-Panel(s) is now in reconfiguration mode; and
3) complete - The reconfiguration request has been completed by the operator and the I-Panel(s) is no longer in reconfiguration mode.

WOM 740 may allow the reconfiguration manager to identify by (e.g., a unique name and email address) the owner of the reconfiguration (the person who is responsible for addition or removal of the patching). Upon initiation of the reconfiguration request, the owner of the reconfiguration request may be sent an email and may also be notified of a pending operation upon logging into NMS.120.

Further, WOM 740 may create and manage the due date of the reconfiguration request. A due date violation message may be sent to the reconfiguration manager with the appropriate information to the owner of the request in the event that the date has passed without a "complete" status.

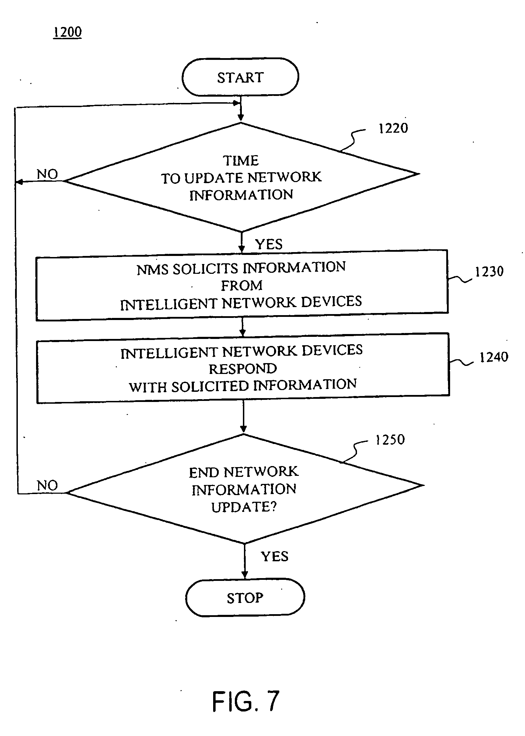

FIG. 7, FIG. 8 and FIG. 9 are flowcharts of exemplary processes by which NMS 120 may receive configuration and status information from the respective intelligent network devices and transmit commands to the intelligent network devices.

At step 1220 of FIG. 7, NMS 120 determines whether an update to storage 160 is appropriate. If so, the process goes to step 1230; otherwise the process returns to step 1220. NMS 120 solicits at step 1230 information from intelligent network devices by sending a request for information, and the process goes to step 1240. In step 1240 intelligent network devices may respond with the requested information, and the process goes to step 1250. In step 1250, NMS 120 determines whether the solicitation process should repeat. If the process is repeated, the process returns to step 1220; otherwise the process ends.

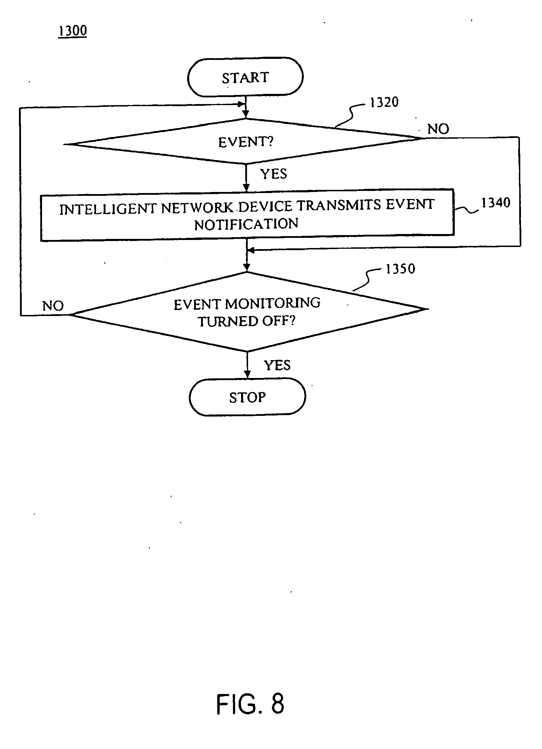

FIG. 8 shows an exemplary event notification flowchart. In step 1320, the intelligent network device determines whether an event has occurred. If an event occurred, the process goes to step 1340; otherwise the process goes to step 1350. In step 1340, the intelligent network device transmits an event notification (or trap message in SNMP) to NMS 120 containing data values associated with the detected event. New data may be received from intelligent network devices as a response to a request or an event notification discussed above in connection with FIGs. 7 and 8. In step 1350, the intelligent network device determines whether the process should be disabled based on the settings in the DIP. If so, the process ends; otherwise the process returns to step 1320.

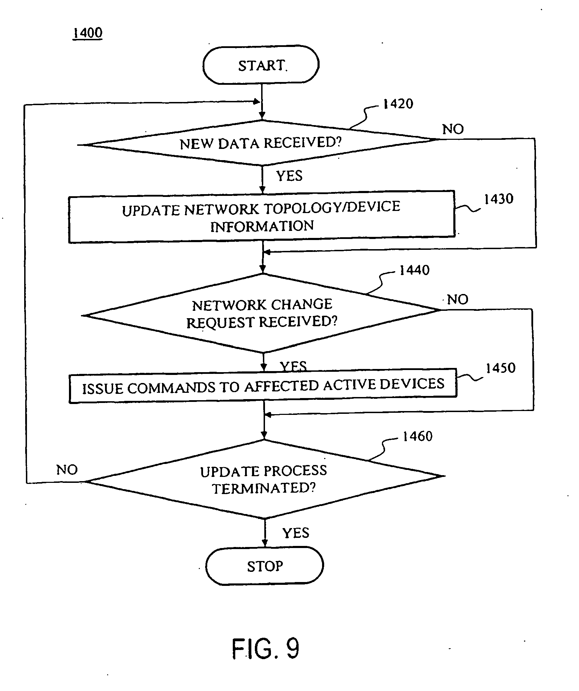

FIG. 9 shows an exemplary NMS process for updating the network database based on new data received in response to a solicitation request, a notification event, or a change by an NMS operator. In step 1420, NMS 120 determines whether that new data is received. If received, the process goes to step 1430; otherwise the process goes to step 1440. In step 1430, NMS 120 updates the network database and the process goes to step 1440. In step 1440, NMS 120 determines whether a network change request has been received from the operator. If received, the process goes to step 1450; otherwise the process goes to step 1460. In step 1450, NMS 120 issues commands consistent with the change request and the process goes to step 1460. In step 1460, NMS 120 determines whether the update process should return to step 1420 or terminate.

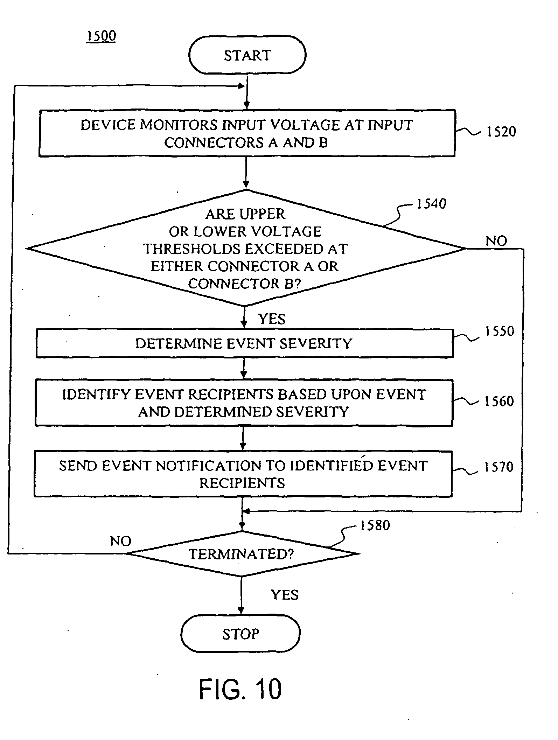

FIG. 10 describes an exemplary error reporting process 1500. In step 1520 an intelligent network device monitors dual input voltages at connection point A and B and the process goes to step 1540. In step 1540, the intelligent network device determines whether an upper or lower voltage threshold has been exceeded at either connection point A or connection point B. If the threshold has been exceeded, an event occurred and the process goes to step 1550, otherwise, the process returns to step 1560. In step 1550, the intelligent network device identifies the severity of the detected event (e.g., based upon a predetermined lookup table) and the process goes to step 1560. In step 1560, the intelligent network device identifies a set of event notification recipients based upon recipients and associated severity values identified in the DIF (or with the managed device's trap recipient table in SNMP) and goes to step 1570. In step 1570, the intelligent network device transmits event notifications and goes to step 1580. In step 1580, the intelligent network device determines whether monitoring should terminate (for example, if a command from NMS 120 forced a disconnect). If the monitoring is to be terminated, the process ends; otherwise the process returns to step 1520.

A DIF defines a basis for the exchange of information between intelligent network devices and NMS 120. For example, an intelligent network device may send a defined event notification to any NMS 120 with which the intelligent network device shares a common DIF. Further, NMS 120 may request information from and/or set control parameters within any intelligent network device with which NMS 120 shares a common DIF. In this manner, NMS 120 may maintain an accurate status of a monitored network and may define and deploy control parameters in accordance with policy that is centrally defined in NMS 120, yet efficiently enforced by the respective intelligent network devices. The preferred embodiment may be implemented in the form of an SNMP Management Information Base (MIB) that defines the core objects associated with each type of intelligent network device and allows new objects to be added as needed in an easily extensible way.

It will be appreciated that various of the above-disclosed and other features and functions, or alternatives thereof, may be desirably combined into many other different systems or applications.

## Claims

1. A network management system (120) that is coupled to one or more intelligent network devices (800), the network management system (120), comprising:
a network manager (710);
one or more control parameters;
wherein the network manager (710) is arranged and operable to transmit one or more of said control parameters to one or more of said intelligent network devices in order to configure said one or more intelligent network devices (800) to locally control power distribution connections thereto; and
a database (160) coupled to the network manager (710), the network manager (710) generating the control parameters based on information in the database (160) the system (120) being **characterised in that** it further comprises:
one or more media access control (MAC) addresses, the network manager (710) transmitting the MAC addresses to selected one or more of the intelligent network devices (800) as control parameters to accept or reject logical connections to the network based on MAC addresses of devices (130, 140, 150) attached to the selected one or more intelligent network devices (800).

2. The network management system (120) of claim 1, further comprising:
one or more notifications; and
one or more data structures, the network manager (710) receiving the notifications from the intelligent network devices (800) and storing information obtained from the notifications in the database (160) according to the data structures.

3. The network management system (120) of claim 2, further comprising:
physical location information related to the intelligent network devices (800) that are stored in the intelligent network devices (800) and logical location information, the network manager (710) receiving from the intelligent network devices (800) notifications that include the physical and logical location information and storing the physical and logical location information in the database (160), and preferably the physical location information including one or more of room number, coordinate, area identification, or Global Positioning System (GPS) location; and the logical location including one or more of port number, connected-to-device identification, Internet Protocol (IP) address, Mac address, or network portion identification.

4. The network management system (120) of claim 2, further comprising;
one or more events, the network manager (710) receiving notifications from the intelligent network devices (800) when events occur at the intelligent network devices (800) and preferably the network manager (710) determining logical and/or physical location associated with an event based on received notifications.

5. The network management system (120) of claim 1, further comprising:
an operator interface (790) coupled to the network manager (710), the network manager (710) receiving command inputs from the operator interface (790) and outputting display information to the operator interface (790), and preferably further comprising :
one or more of move/add/change commands; and
one or more of move/add/change orders, the network manager (710) generating the move/add/change orders based on the move/add/change commands, and preferably further comprising :
one or more of indicator commands, the network manager (710) generating the indicator commands and transmitting the indicator commands to selected intelligent network devices (800) to assist implementing the move/add/change orders.

6. The network management system (120) of claim 1, further comprising:
one or more software modules, the network manager transmitting the software modules (730) to the intelligent network devices (800) for updating software in the intelligent network devices (800), or the intelligent network devices (800) including A-Jack, powered-patch-panel and/or I-Panel.

7. A method for managing a network (110) that includes a network manager (710), a database (160) coupled to the network manager (710), and intelligent network devices (800), the method comprising:
generating one or more control parameters based on information in the database (160);
transmitting control parameters from the network manager (710) to the intelligent network devices (800); and
employing the intelligent network devices (800) to locally control power distribution connections to the intelligent network devices (800) based on the control parameters; **characterised in that** the network (110) comprises one or more media access control (MAC) addresses, and **in that** the method comprises the further steps of:
transmitting one or more MAC addresses from the network manager (710) to selected one or more of the intelligent network devices (800) as control parameters; and
accepting or rejecting logical connections to the intelligent network devices (800) based on the MAC addresses.

8. The method of claim 7, further comprising:
generating one or more notifications in the intelligent network devices (800);
transmitting the notifications to the network manager (120); and
storing information in the notifications in the database (160).

9. The method of claim 8, further comprising:
storing in the intelligent network devices (800) physical location information related to the intelligent network devices (800);
generating logical location information related to the intelligent network devices (800);
receiving at the network manager (710) notifications that include the physical and logical location information; and
storing the physical and logical information in the database (160) and preferably the physical location information including one or more of room number, coordinate, area identification, or GPS coordinates; and the logical location including one or more of port number, connected-to-device identification, IP address, MAC address, or network portion identification.

10. The method of claim 8, further comprising:
detecting one or more events; and
receiving at the network manager (710) notifications from the intelligent network devices (800) when events occur at the intelligent network devices (800) and preferably further comprising receiving a logical and/or physical location associated with an event based on received notifications.

11. The method of claim 7, further comprising:
receiving one or more of move/add/change commands; and
generating one or more of move/add/change orders based on the move/add/change commands, and preferably further comprising:
generating one or more indicator commands; and
transmitting the indicator commands to selected intelligent network devices (800) to assist implementing the move/add/change orders.

12. The method of claim 7, further comprising transmitting software modules (730) to the intelligent network devices (800) for updating software in the intelligent network devices (800).

## Patentansprüche

1. Netzwerkmanagementsystem (120), das mit einem oder mehreren intelligenten Netzwerkgeräten (800) verbunden ist, wobei das Netzwerkmanagementsystem (120) Folgendes aufweist:
einen Netzwerkmanager (710);
einen oder mehrere Steuerparameter;
wobei der Netzwerkmanager (710) angeordnet und bedienbar ist, einen oder mehrere der Steuerparameter an eines oder mehrere der intelligenten Netzwerkgeräte zu übermitteln, um das eine oder die mehreren der intelligenten Netzwerkgeräte (800) zu konfigurieren, sodass die Energieverteilungsverbindungen damit lokal gesteuert werden; und
eine Datenbank (160), die mit dem Netzwerkmanager (710) verbunden ist, wobei der Netzwerkmanager (710) die Steuerparameter auf der Grundlage von Informationen in der Datenbank (160) generiert, und wobei das System (120) **dadurch gekennzeichnet ist, dass** es weiters Folgendes aufweist:
eine oder mehrere Media Access Control-Adressen (MAC-Adressen), wobei der Netzwerkmanager (710) die MAC-Adressen als Steuerparameter an eines oder mehrere ausgewählte der intelligenten Netzwerkgeräte (800) übermittelt, um logische Verbindungen mit dem Netzwerk auf der Grundlage der MAC-Adressen der Geräte (130, 140, 150), die dem einen oder den mehreren ausgewählten intelligenten Netzwerkgeräten (800) zugeteilt sind, zu akzeptieren oder abzulehnen.

2. Netzwerkmanagementsystem (120) nach Anspruch 1, weiters aufweisend:
eine oder mehrere Benachrichtigungen; und
eine oder mehrere Datenstrukturen, wobei der Netzwerkmanager (710) die Benachrichtigungen von den intelligenten Netzwerkgeräten (800) empfängt und die Informationen, die er aus den Benachrichtigungen erhält, gemäß den Datenstrukturen in der Datenbank (160) speichert.

3. Netzwerkmanagementsystem (120) nach Anspruch 2, weiters aufweisend:
physische Positionsangaben, welche die intelligenten Netzwerkgeräte (800) betreffen und in den intelligenten Netzwerkgeräten (800) gespeichert sind, und logische Positionsangaben, wobei der Netzwerkmanager (710) von den intelligenten Netzwerkgeräten (800) Benachrichtigungen empfängt, welche die physischen und logischen Positionsangaben enthalten, und die physischen und logischen Positionsangaben in der Datenbank (160) speichert, und wobei vorzugsweise die physischen Positionsangaben eine oder mehrere aus Raumnummer, Koordinaten, Bereichsidentifikation oder Global Positioning System-(GPS)-Position enthalten; und die logischen Positionsangaben eine oder mehrere aus Portnummer, Identifikation des Geräteanschlusses, Internet Protocol-(IP)-Adresse, MAC-Adresse oder Identifikation des Netzwerkabschnitts enthalten.

4. Netzwerkmanagementsystem (120) nach Anspruch 2, weiters aufweisend:
ein oder mehrere Ereignisse, wobei der Netzwerkmanager (710) von den intelligenten Netzwerkgeräten (800) Benachrichtigungen empfängt, wenn an den intelligenten Netzwerkgeräten (800) Ereignisse auftreten, und wobei der Netzwerkmanager (710) vorzugsweise auf der Grundlage der empfangenen Benachrichtigungen die logische und/oder physische Position ermittelt, die zu einem Ereignis gehört.

5. Netzwerkmanagementsystem (120) nach Anspruch 1, weiters aufweisend:
eine Benutzeroberfläche (790), die mit dem Netzwerkmanager (710) verbunden ist, wobei der Netzwerkmanager (710) Befehlseingaben von der Benutzeroberfläche (790) empfängt und Anzeigeinformationen an die Benutzeroberfläche (790) ausgibt, und vorzugsweise weiters aufweisend:
einen oder mehrere der Befehle Verschieben/Hinzufügen/Ändern; und
eine oder mehrere der Anweisungen Verschieben/Hinzufügen/Ändern, wobei der Netzwerkmanager (710) die Anweisungen Verschieben/Hinzufügen/Ändern auf der Grundlage der Befehle Verschieben/Hinzufügen/Ändern generiert, und vorzugsweise weiters aufweisend:
einen oder mehreren Indikatorbefehle, wobei der Netzwerkmanager ;710) die Indikatorbefehle generiert und die Indikatorbefehle an ausgewählte intelligente Netzwerkgeräte (800) übermittelt, die beim Umsetzen der Anweisungen Verschieben/Hinzufügen/Ändern helfen sollen.

6. Netzwerkmanagementsystem (120) nach Anspruch 1, weiters aufweisend:
ein oder mehrere Softwaremodule, wobei der Netzwerkmanager die Softwaremodule (730) an die intelligenten Netzwerkgeräte (800) übermittelt, um Software in den intelligenten Netzwerkgeräten (800) zu aktualisieren, oder wobei die intelligenten Netzwerkgeräte (800) A-Jack, Powered-Patch-Panel und/oder I-Panel enthalten.

7. Verfahren zum Managen eines Netzwerks (110), das einen Netzwerkmanager (710), eine an den Netzwerkmanager (710) gekoppelte Datenbank (160) und intelligente Netzwerkgeräte (800) enthält, wobei das Verfahren Folgendes aufweist:
Generieren eines oder mehrerer Steuerparameter auf der Grundlage von Informationen in der Datenbank (160);
Übermitteln von Steuerparametern vom Netzwerkmanager (710) an die intelligenten Netzwerkgeräte (800); und
Einsetzen der intelligenten Netzwerkgeräte (800), um die Energieverreilungsverbindungen mit den intelligenten Netzwerkgeräten (800) auf der Grundlage der Steuerparameter lokal zu steuern; **dadurch gekennzeichnet, dass** das Netzwerk (110) eine oder mehrere Media Access Control-(MAC)-Adressen aufweist, und dass das Verfahren weiters die folgenden Schritte aufweist:
Übermitteln einer oder mehrerer MAC-Adressen als Steuerparameter vom Netzwerkmanager (710) an eines oder mehrere ausgewählte der intelligenten Netzwerkgeräte (800); und
Akzeptieren oder Ablehnen logischer Verbindungen mit den intelligenten Netzwerkgeräten (800) auf der Grundlage der MAC-Adressen.

8. Verfahren nach Anspruch 7, weiters aufweisend:
Generieren einer oder mehrerer Benachrichtigungen in den intelligenten Netzwerkgeräten (800);
Übermitteln der Benachrichtigungen an den Netzwerkmanager (710); und
Speichern der Informationen aus den Benachrichtigungen in der Datenbank (160).

9. Verfahren nach Anspruch 8, weiters aufweisend:
Speichern von physischen Positionsangaben, welche die intelligenten Netzwerkgeräte (800) betreffen, in den intelligenten Netzwerkgeräten (800);
Generieren von logischen Positionsangaben, welche die intelligenten Netzwerkgeräte (800) betreffen;
Empfangen von Benachrichtigungen, welche die physischen und logischen Positionsangaben enthalten, durch den Netzwerkmanager (710); und
Speichern der physischen und logischen Positionsangaben in der Datenbank (160), wobei vorzugsweise die physischen Positionsangaben eine oder mehrere aus Raumnummer, Koordinaten, Bereichsidentifikation oder GPS-Koordinaten enthalten; und die logischen Positionsangaben eine oder mehrere aus Portnummer, Identifikation des Geräteanschlusses, IP-Adresse, MAC-Adresse oder Identifikation des Netzwerkabschnitts enthalten.

10. Verfahren nach Anspruch 8, weiters aufweisend:
Detektieren eines oder mehrerer Ereignisse; und
Empfangen von Benachrichtigungen von den intelligenten Netzwerkgeräten (800) durch den Netzwerkmanager (710), wenn an den intelligenten Netzwerkgeräten (800) Ereignisse auftreten, und vorzugsweise weiters aufweisen das Empfangen einer logischen und/oder physischen Position, die zu einem Ereignis gehört, auf der Grundlage empfangener Benachrichtigungen.

11. Verfahren nach Anspruch 7, weiters aufweisend:
Empfangen eines oder mehrerer der Befehle Verschieben/Hinzufügen/Ändern; und
Generieren einer oder mehrerer der Anweisungen Verschieben/Hinzufügen/Ändern auf der Grundlage der Befehle Verschieben/Hinzufügen/Ändern, und vorzugsweise weiters aufweisend:
Generieren eines oder mehrerer Indikatorbefehle; und
Übermitteln der Indikatorbefehle an ausgewählte intelligente Netzwerkgeräte (800), die beim Umsetzen der Anweisungen Verschieben/Hinzufügen/Ändern helfen sollen.

12. Verfahren nach Anspruch 7, weiters aufweisend das Übermitteln von Softwaremodulen (730) an die intelligenten Netzwerkgeräte (800), um Software in den intelligenten Netzwerkgeräten (800) zu aktualisieren.

## Revendications

1. Système de gestion de réseau (120) qui est couplé à un ou plusieurs dispositifs de réseau intelligents (800), le système de gestion de réseau (120) comprenant :
un gestionnaire de réseau (710) ;
un ou plusieurs paramètres de commande ;
dans lequel le gestionnaire de réseau (710) est agencé et utilisable pour transmettre un ou plusieurs desdits paramètres de commande à un ou plusieurs desdits dispositifs de réseau intelligents afin de configurer lesdits un ou plusieurs dispositifs de réseau intelligents (800) pour commander localement les connexions de distribution d'électricité à ceux-ci ; et
une base de données (160) couplée au gestionnaire de réseau (710), le gestionnaire de réseau (710) générant les paramètres de commande sur la base des informations dans la base de données (160), le système (120) étant **caractérisé en ce qu'**il comprend en outre :
une ou plusieurs adresses de contrôle d'accès au support (MAC), le gestionnaire de réseau (710) transmettant les adresses MAC à un ou plusieurs dispositifs de réseau intelligents sélectionnés (800) en tant que paramètres de commande pour accepter ou rejeter des connexions logiques au réseau sur la base des adresses MAC des dispositifs (130, 140, 150) attachés à l'un ou plusieurs dispositifs de réseau intelligents sélectionnés (800).

2. Système de gestion de réseau (120) selon la revendication 1, comprenant en outre :
une ou plusieurs notifications ; et
une ou plusieurs structures de données, le gestionnaire de réseau (710) recevant les notifications des dispositifs de réseau intelligents (800) et stockant des informations obtenues des notifications dans la base de données (160) en fonction des structures de données.

3. Système de gestion de réseau (120) selon la revendication 2, comprenant en outre :
des informations d'emplacement physique liées aux dispositifs de réseau intelligents (800) qui sont stockées dans les dispositifs de réseau intelligents (800) et des informations d'emplacement logique, le gestionnaire de réseau (710) recevant des dispositifs de réseau intelligents (800) des notifications qui comprennent les informations d'emplacement physique et logique et stockant les informations d'emplacement physique et logique dans la base de données (160), et de préférence les informations d'emplacement physique comprenant un ou plusieurs d'un numéro de salle, d'une coordonnée, d'une identification de zone, d'un emplacement de système de positionnement global (GPS) ; et les informations d'emplacement logique comprenant un ou plusieurs d'un numéro de port, d'une identification de connexion au dispositif, d'une adresse de protocole Internet (IP), d'une adresse Mac, ou d'une identification de partie de réseau.

4. Système de gestion de réseau (120) selon la revendication 2, comprenant en outre :
un ou plusieurs événements, le gestionnaire de réseau (710) recevant des notifications des dispositifs de réseau intelligents (800) lorsque des événements surviennent au niveau des dispositifs de réseau intelligents (800) et de préférence le gestionnaire de réseau (710) déterminant l'emplacement logique et/ou physique associé à un événement sur la base des notifications reçues.

5. Système de gestion de réseau (120) selon la revendication 1, comprenant en outre :
une interface opérateur (790) couplée au gestionnaire de réseau (710), le gestionnaire de réseau (710) recevant des entrées de commande de l'interface opérateur (790) et délivrant des informations d'affichage à l'interface opérateur (790), et de préférence comprenant en outre :
une ou plusieurs commandes de déplacement/ d'ajout/de changement ; et
un ou plusieurs ordres de déplacement/ d'ajout/de changement, le gestionnaire de réseau (710) générant les ordres de déplacement/d'ajout/de changement sur la base des commandes de déplacement/d'ajout/de changement, et de préférence comprenant en outre :
une ou plusieurs commandes d'indicateur, le gestionnaire de réseau (710) générant les commandes d'indicateur et transmettant les commandes d'indicateur aux dispositifs de réseau intelligents sélectionnés (800) pour aider à la mise en oeuvre des ordres de déplacement/d'ajout/de changement.

6. Système de gestion de réseau (120) selon la revendication 1, comprenant en outre :
un ou plusieurs modules logiciels, le gestionnaire de réseau transmettant les modules logiciels (730) aux dispositifs de réseau intelligents (800) pour mettre à jour le logiciel dans les dispositifs de réseau intelligents (800), ou les dispositifs de réseau intelligents (800) comprenant un A-Jack, un tableau de connexions électriques et/ou un I-Panel.

7. Procédé de gestion d'un réseau (110) qui comprend un gestionnaire de réseau (710), une base de données (160) couplée au gestionnaire de réseau (710), et des dispositifs de réseau intelligents (800), le procédé comprenant :
la génération d'un ou plusieurs paramètres de commande sur la base d'informations dans la base de données (160) ;
la transmission des paramètres de commande du gestionnaire de réseau (710) aux dispositifs de réseau intelligents (800) ; et
l'emploi des dispositifs de réseau intelligents (800) pour commander loyalement des connexions de distribution d'électricité aux dispositifs de réseau intelligents (800) sur la base des paramètres de commande ; **caractérisé en ce que** le réseau (110) comprend une ou plusieurs adresses de contrôle d'accès au support (MAC), et **en ce que** le procédé comprend en outre les étapes de :
la transmission d'une ou plusieurs adresses MAC du gestionnaire de réseau (710) à un ou plusieurs dispositifs de réseau intelligents sélectionnés (800) en tant que paramètres de commande ; et
l'acceptation ou le rejet de connexions logiques aux dispositifs de réseau intelligents (800) sur la base des adresses MAC.

8. Procédé selon la revendication 7, comprenant en outre :
la génération d'une ou plusieurs notifications dans les dispositifs de réseau intelligents (800) ;
la transmission des notifications au gestionnaire de réseau (120) ; et
le stockage des informations dans les notifications dans la base de données (160).

9. Procédé selon la revendication 8, comprenant en outre :
le stockage dans les dispositifs de réseau intelligents (800) d'informations d'emplacement physique liées aux dispositifs de réseau intelligents (800) ;
la génération d'informations d'emplacement logique liées aux dispositifs de réseau intelligents (800) ;
la réception au niveau du gestionnaire de réseau (710) de notifications comprenant les informations d'emplacement physique et logique ; et
le stockage des informations d'emplacement physique et logique dans la base de données (160) et de préférence les informations d'emplacement physique comprenant un ou plusieurs d'un numéro de salle, d'une coordonnée, d'une identification de zone, ou de coordonnées de système de positionnement global (GPS) ; et les informations d'emplacement logique comprenant un ou plusieurs d'un numéro de port, d'une identification de connexion au dispositif, d'une adresse de protocole Internet (IP), d'une adresse MAC, ou d'une identification de partie de réseau.

10. Procédé selon la revendication 8, comprenant en outre :
la détection d'un ou plusieurs événements ; et
la réception au niveau du gestionnaire de réseau (710) de notifications des dispositifs de réseau intelligents (800) lorsque des événements surviennent au niveau des dispositifs de réseau intelligents (800) et de préférence comprenant en outre la réception d'un emplacement logique et/ou physique associé à un événement sur la base des notifications reçues.

11. Procédé selon la revendication 7, comprenant en outre :
la réception d'une ou plusieurs commandes de déplacement/d'ajout/de changement ; et
la génération d'un ou plusieurs ordres de déplacement/d'ajout/de changement sur la base des commandes de déplacement/d'ajout/de changement, et de préférence comprenant en outre :
la génération d'une ou plusieurs commandes d'indicateur ;
la transmission des commandes d'indicateur aux dispositifs de réseau intelligents sélectionnés (800) pour aider à la mise en oeuvre des ordres de déplacement/d'ajout/de changement.

12. Procédé selon la revendication 7, comprenant en outre la transmission de modules logiciels (730) aux dispositifs de réseau intelligents (800) pour mettre à jour le logiciel dans les dispositifs de réseau intelligents (800).
